# EUROPEAN PATENT APPLICATION

(11) **EP 1 494 241 A1**
(43) Date of publication of application: **05.01.2005**
(21) Application number: 03403202.9
(22) Date of filing: 01.07.2003
(51) Int. Cl.: G11B 27/32, G11B 27/034, H04N 5/00

(54) **Method of linking metadata to a data stream**

(71) Applicant: Deutsche Thomson-Brandt GmbH, 78048 Villingen-Schwenningen (DE)
(72) Inventor: Adolph, Dirk, 30952 Ronnenberg (DE); Hörentrup, Jobst, 30163 Hannover (DE); Li, Hui, 30419 Hannover (DE); Schiller, Harald, 30539 Hannover (DE); Jansen, Uwe, 30926 Seelze (DE)
(74) Representative: Hartnack, Wolfgang, Dipl.-Ing.

(57) **Abstract**

Method of linking metadata to a data stream, the data stream having time-based navigation data and play list data, the play list data being indicative of play items of one or more play lists, the time-based navigation data mapping play items to the data stream, the method including the steps of:
- using the time-based navigation data for mapping of metadata to the play items,
- storing a metadata link being descriptive of the mapping of the metadata to the play items.

## Description

The invention relates to the field of storage and transmission of packetised data, and more particularly to the linking of metadata to a data stream.

### Background

Streaming is a technology which is used for storing, transmitting, and broadcasting of packetised digital data, e.g. for audio and video broadcasting services. Often additional information is provided as an added value accompanying the audio and video data stream. For example, video summaries, story boards, cast background information, advertisement etc. are transmitted together with the streaming media as so-called metadata.

When recording such a broadcast audio and video (AV) data stream together with metadata on storage media like Blue-ray Disc (BD) it becomes necessary to link the metadata to the AV stream. This is also true for manually added metadata. As an example, a user may want to link a short biography about James Dean pulled from the internet to the AV of the movie "East of Eden". The link may be desirable to point to a special scene within the movie when James Dean is starting the car race ending at the cliffs.

The linking of metadata to a data stream is as such known from the prior art.

### Invention

However, metadata and data streams are often stored independently and on different storage media. When a prior art data stream is edited the linkage of the metadata to the data stream is thus easily lost and the metadata might become unusable due to the editing operation. There is therefore a need to provide an improved method of linking of metadata to a data stream.

The invention provides for a method of linking metadata to a data stream which relies on time-based navigation data associated to the data stream as a reference for mapping the metadata to the data stream. The advantage of this approach is that the original time-based navigation data which is referenced by the meta data remains unchanged and allows for a meaningful change detection and even adaptation when a PlayList containing the program data items or the stream data itself are edited. This way the original assignment of metadata to PlayList items is preserved and survives the editing operation.

In accordance with a preferred embodiment of the invention system time clock (STC) clip file navigation data is used as the time-based navigation data for the mapping of the metadata. STC clip file information is data concerning the number, start and position of the monotonous system time clock sequences of the data stream. The entirety of the navigation information is often referred to as 'clip' or 'clip information' which comprises the STC sequence information and various other layers of navigation information such as program information and arrival time clock (ATC) sequence information.

In accordance with a further preferred embodiment of the invention the mapping of the metadata is stored as an XML file. Usage of XML is advantageous as it is a generic format which can be used for various applications and hardware devices.

A problem to be solved by the invention is to provide improved linking of metadata to a data stream. This problem is solved by the method disclosed in claim 1. An apparatus that utilises this method is disclosed in claim 8.

In principle, the inventive method is suited for linking metadata to a data stream, the data stream having time-based navigation data and play list data, the play list data being indicative of play items of one or more play lists, the time-based navigation data mapping play items to the data stream, the method including the steps of:
- using the time-based navigation data for mapping metadata to the play items,
- storing a metadata link being descriptive of the mapping of the metadata to the play items.

In principle the inventive apparatus links metadata to a data stream, the data stream having time-based navigation data and play list data, the play list data being indicative of play items of one or more play lists, the time-based navigation data mapping play items to the data stream, the apparatus including:
- means for mapping the metadata to the play items, whereby the time-based navigation data is used as a reference for the mapping;
- means for generating a metadata link file being descriptive of the mapping of the metadata to the play items. Advantageous additional embodiments of the invention are disclosed in the respective dependent claims.

### Drawings

Exemplary embodiments of the invention are described with reference to the accompanying drawings, which show in:
- Fig. 1: Mapping of PlayList items to a data stream and mapping of metadata to the PlayList;
- Fig. 2: Navigation data and a metadata link before editing;
- Fig. 3: The navigation data of figure 2 after editing.

### Exemplary embodiments

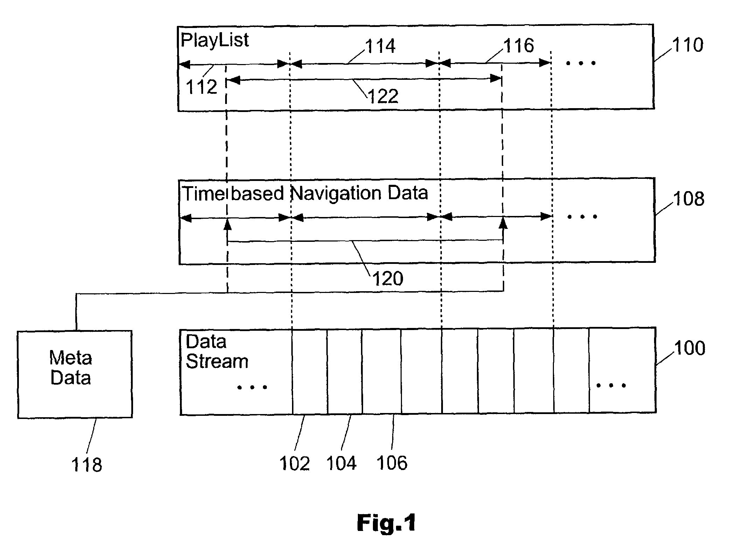

Figure 1 shows a data stream 100. For example data stream 100 is a digital audio and video (AV) stream comprising MPEG compressed packetised data. Data stream 100 includes a sequence of data packets 102, 104, 106, ..., which carry the packetised data. When data stream 100 was received the recording did generate navigation data comprising PlayList 110 and time-based navigation data 108.

The time-based navigation data 108 can be organised into various layers such as arrival time clock (ATC) sequence information and system time clock (STC) sequence information. Further data stream 100 has at least one PlayList 110 comprising a number of PlayItems 112, 114, 116, .... For example, a PlayItem is a recorded program, a recorded song, an advertisement or an other sequence of audio and video data. Each PlayItem of the PlayList 110 is mapped onto data stream 100 for identification of the data packets of data stream 100 belonging to a particular PlayItem by means of time-based navigation data 108 as illustrated in Fig. 1. Such mapping technique is as such known from the prior art and used for digital recording on DVR and BD.

In addition the recorded data stream 100 can contain metadata. This metadata can be extracted from the stream and stored beside it in a database on the recording medium 118. Another method for metadata generation is automatic or manual generation of metadata.

A prior art metadata link is referencing on stream data by means of the PlayList navigation data. For assigning a certain time period (range) of a data stream to the metadata, the link stores the number of the PlayList and the start and end time within the PlayList, and playback of the data stream can be started by using this top-layer navigation information.

In contrast, in accordance with the principles of the invention, metadata 118 is linked to the PlayList 110 by including PlayItem data and time-based navigation data 108 as a reference for the mapping. For example, metadata 118 contains a metadata link which specifies a link range 120 using time-based navigation data 108 as a reference. By means of link range 120 metadata 118 is mapped to the PlayItem range 122 which partly covers PlayItem 112 and PlayItem 116 and completely covers PlayItem 114.

Mapping metadata 118 through the intermediary of time-based navigation data 108 to PlayList 110 rather than directly to PlayItems of the PlayList 110 has the advantage that the metadata link information is preserved when PlayList 110 is edited. This is because time-based navigation data 108 remains unchanged when PlayList 110 is edited. The comparison of the metadata link containing the original intermediary of time-based navigation data as a reference against those valid after the stream editing allows for detecting and metadata link adaptation.

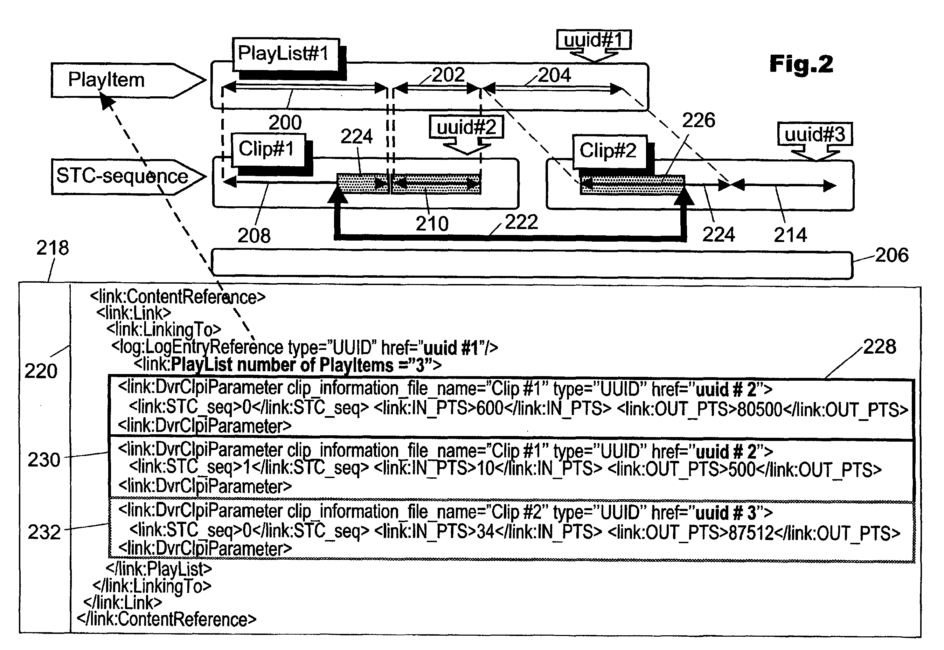

Figure 2 shows a more detailed example. PlayList#1 has three play items 200, 202 and 204. PlayList#1 is identified by universal unique identifier (UUID) uuid#1 (cf. ISO-11578, ISO/IEC 11578:1996, Information technology - Open Systems Interconnection - Remote Procedure Call (RPC), "UUIDs and GUIDs", Leach, Paul J., Salz, Paul, Network Working Group - Internet Draft - February 4, 1998 (draft-leach-uuids-guids-01.txt)).

In the embodiment considered here the STC information of the data stream 206 is used as a time-based navigation data reference. Navigation data clip#1 contains STC sequences 208 and 210. Clip#1 is identified by uuid#2. Clip#2 contains STC sequence 212 and STC sequence 214. Clip#2 is identified by uuid#3.

Metadata 218 is assigned to a range of PlayItems within PlayList#1 by means of metadata link file 220 which belongs to metadata 218. Metadata link file 220 is an XML file which specifies link range 222. Link range 222 covers portion 224 of STC sequence 208, STC sequence 210 and portion 226 of STC sequence 212. Portion 224 is identified by entry 228 in metadata link file 220, STC sequence 210 is identified by entry 230 and portion 226 is identified by entry 232.

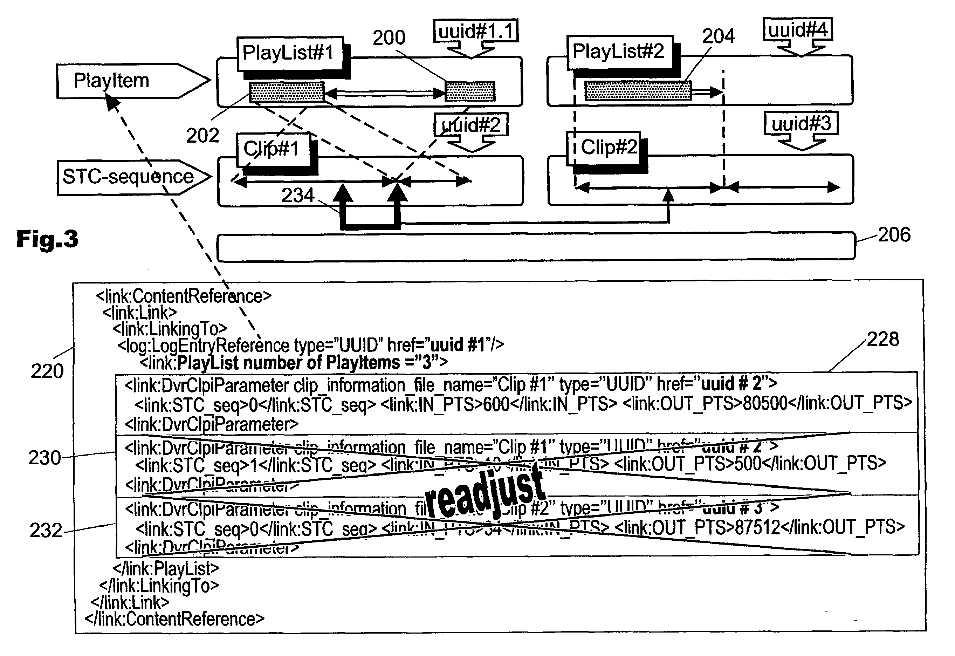

Figure 3 illustrates the effect of an editing operation by way of example. PlayList#1 was changed by switching the order of PlayItems 200 and 202 and cutting off PlayItem 204 which now belongs to PlayList#2. uuid#1 has been replaced by new uuid#1.1 and new uuid#4 has been assigned to PlayList#2. In the example the editing of original PlayList#1 has changed the PlayList only but has left unchanged clip#1 and clip#2 as well as metadata 218 and in particular metadata link file 220. The effect of the editing of the PlayList is that the mapping of the PlayItems onto data stream 206 through time-based navigation data, i.e. clip#1 and clip#2 has changed. As metadata link file 220 still contains the complete original link information it can be re-adjusted in accordance with the editing of the PlayList. This re-adjustment is required for entries 230 and 232 in the example considered here. The process of re-adjusting metadata link file 220 can be performed as follows:
- checking whether reference PlayList UUID is available;
- checking whether the clip order is the same;
- checking whether the clip parameters are available and have not been modified;
- adapting the metadata link file 220 by using all available PlayLists with all parts thereof.

The result of this re-adjustment process is a new link range 234 as depicted in figure 3.

Alternatively, the metadata link file 220 can be used to suggest various alternatives to a user for the readjustments.

A further alternative is the generation of a new and additional PlayList to restore and keep the original PlayList information.

## Claims

1. Method of linking metadata (118, 218) to a data stream (100, 206), the data stream having time-based navigation data (108, STC) and play list data (110), the play list data being indicative of play items (112, 114, 116, 200, 202, 204) of one or more play lists, the time-based navigation data mapping play items to the data stream, the method including the steps of:
- using the time-based navigation data for mapping metadata to the play items,
- storing a metadata link (220) being descriptive of the mapping of the metadata to the play items.

2. Method according to claim 1, wherein the time-based navigation data is system time clock (STC) navigation data.

3. Method according to claim 1 or 2, wherein the metadata link (220) is stored as an XML file.

4. Method according to claim 1, 2 or 3, wherein the metadata link (220) specifies a metadata range by means of portions of system time clock sequences of the time-based navigation data.

5. Computer program product, in particular digital storage medium, for linking metadata to a data stream, the data stream having time-based navigation data and play list data, the play list data being indicative of play items of one or more play lists, the time-based navigation data mapping play items to the data stream, said product including program means for performing the steps of:
- using the time-based navigation data for mapping metadata to the play items;
- storing a metadata link being descriptive of the mapping of the metadata to the play items.

6. Data carrier, such as CD, DVD, or Blue-ray disc (BD), including a data structure for storing a data stream and for linking metadata to that data stream, the data stream having time-based navigation data and play list data, the play list data being indicative of play items of one or more play lists, the time-based navigation data mapping play items to the data stream, and a metadata link being descriptive of a mapping of the metadata to the play item using the time-based navigation data as a reference.

7. Carrier wave, such as a digital video broadcast carrier wave, carrying a data stream and meta data, the data stream having time-based navigation data and play list data, the play list data being indicative of play items of one or more play lists, the time-based navigation data mapping play items to the data stream, and a metadata link being descriptive of the mapping of the meta data to the play items using the time-based navigation data as a reference.

8. Apparatus for linking metadata (118, 218) to a data stream (100, 206), the data stream having time-based navigation data (108, STC) and play list data (110), the play list data being indicative of play items (112, 114, 116, 200, 202, 204) of one or more play lists, the time-based navigation data mapping play items to the data stream, the apparatus including:
- means for mapping the metadata to the play items, whereby the time-based navigation data is used as a reference for the mapping;
- means for generating a metadata link file (220) being descriptive of the mapping of the metadata to the play items.

9. Apparatus according to claim 8, whereby the metadata link is an XML file.
